# EUROPEAN PATENT SPECIFICATION

(11) **EP 2 783 104 B1**
(45) Date of publication and mention of the grant of the patent: **06.04.2016**
(21) Application number: 12787645.6
(22) Date of filing: 14.11.2012
(51) Int. Cl.: F03D 1/06, F03D 7/02, F03D 80/70

(54) **A wind turbine comprising a blade pitch system**
Windturbine mit einem Blattverstellsystem
Turbine éolienne comprenant un système de réglage du pas des pales

(30) Priority: 17.11.2011 DK 201170629; 17.11.2011 US 201161560833 P
(43) Date of publication of application: 01.10.2014
(73) Proprietor: Vestas Wind Systems A/S, 8200 Aarhus N (DK)
(72) Inventor: NEUBAUER, Jesper Lykkegaard, DK-8543 Hornslet (DK)
(74) Representative: Vestas Patents Department
(86) International application number: PCT/DK2012/050417
(87) International publication number: WO 2013/071936

(56) References cited:
- DE-A1-102008 045 847
- DE-A1-102010 010 639
- US-A1- 2011 142 631

## Description

### TECHNICAL FIELD AND BACKGROUND

The invention relates to a horizontal axis wind turbine comprising a rotor with a hub, at least one blade, and a blade pitch system.

In some pitch controlled wind turbines the blade pitch actuation is provided by means of electric motors with pinions acting on gear rings or gear ring segments at the blades. A problem that often occurs in such turbines is wear of the gear ring from engagement with the pinions. Since the gear ring is often integrally formed with, e.g. machined in, a ring of the blade bearing, the solution to the problem will be to change the entire bearing, which means that the blade has to be removed first. This is a large operation that takes a long time and requires a big external crane and a lot of man hours, and which therefore is expensive, both due to the direct cost of the equipment and staff needed, and due to the loss of electricity production.

EP2108815A2 suggests machining away a worn part of a gear ring, and replacing it with a replacement part. However, such machining requires accurate machining in the hub of the wind turbine rotor, which can be difficult to accomplish and might take a long time, and is therefore not providing a satisfactory solution to the problem mentioned above.

US20110142631A1 describes an alternative attempt to solve the problem. The gear ring can be loosened and rotated so as to move an un-worn part of it into the engagement area with the motor pinion. This means that a large part of the gear ring will during normal operation be un-used, and it also presents a challenge in securing the gear ring which in large wind turbines transfers very high forces.

### SUMMARY

It is an object of the invention to provide an electrically driven blade pitch system which makes it possible to address the problem of wear of the gear ring without compromising the integrity and simplicity of the pitch system.

The object is reached with a horizontal axis wind turbine comprising a rotor with a hub, at least one blade, and a blade pitch system, the blade pitch system comprising for each blade
- a blade bearing mounted between the hub and the blade, the bearing comprising two bearing rings, one of which is fixed to the hub and the other of which is fixed to the blade,
- a ring gear device fixed to a first of the bearing rings, and
- a pinion mounted to a motor, where the motor is fixed to the hub if the first bearing ring is fixed to the blade and the motor is fixed to the blade if the first bearing ring is fixed to the hub, and where the pinion is engaged with the ring gear device,
- wherein a connection between the first bearing ring and the ring gear device comprises a toothed interface.

The ring gear device can be a ring gear, extending around the entire circumference of the blade bearing, or it can be a ring gear segment, extending only partially along the circumference of the blade bearing. The motor can be of any suitable type, e.g. electric or hydraulic.

Providing a separate ring gear device that is connected to the first bearing ring with a toothed interface makes it possible to easily replace the ring gear device due to wear, without having to dismount the entire blade and bearing. The toothed interface makes the connection very strong and well suited to transfer forces from the pinion via the ring gear device to the bearing. The toothed interface makes it possible to secure the ring gear device to the first bearing ring with bolts that do not have to transfer the loads due to blade pitch actions in operation. Thus a relatively small number, and/or small dimensions can be used for the bolts, which make the design and the service easier.

It should be noted that in embodiments where the motor is fixed to the hub, it can be fixed directly onto the hub, or it can be fixed onto some intermediate part which in turn is fixed to the hub. Similarly, in embodiments where the motor is fixed to the blade, it can be fixed directly onto the blade, or it can be fixed onto some intermediate part which in turn is fixed to the blade.

Preferably, the ring gear device is mounted directly onto the first of the bearing rings.

Preferably, the first bearing ring and the ring gear device present complementary teeth that mesh in the interface. Preferably, the teeth are formed by grooves oriented in parallel to the rotational axis of the bearing. Thereby the interface will effectively transfer torque between the pinion and the bearing.

Preferably, the gear ring device is a gear ring segment that has a length and a location adapted to the engagement of the pinion during normal operation of the wind turbine, which normal operation excludes for example feathering of the blades. Thereby, as exemplified below, the pitch system could comprise a second ring gear segment which has a length and a location adapted to the engagement of the pinion during feathering of the blades for shutting down the wind turbine. Since normal operation is what will create the largest amount of wear, this solution provides for replacing only the part of the gear ring segments that needs it, while the remaining segment can be left since it is exposed to much less wear.

### DETAILED DESCRIPTION

Below an embodiment of the invention will be described with reference to the drawings in which
- fig. 1 shows a side view of a horizontal axis wind turbine,
- fig. 2 shows a cross-sectional view of a part of an interface between a hub and one of the blades of the wind turbine in fig. 1,
- fig. 3 shows a cross-section of the hub to blade interface oriented as indicated by the arrows III-III in fig. 2,
- fig. 4 shows a detail of the cross-section in fig. 3, and
- fig. 5 shows a view, corresponding to the one in fig. 4, in an alternative embodiment of the invention.

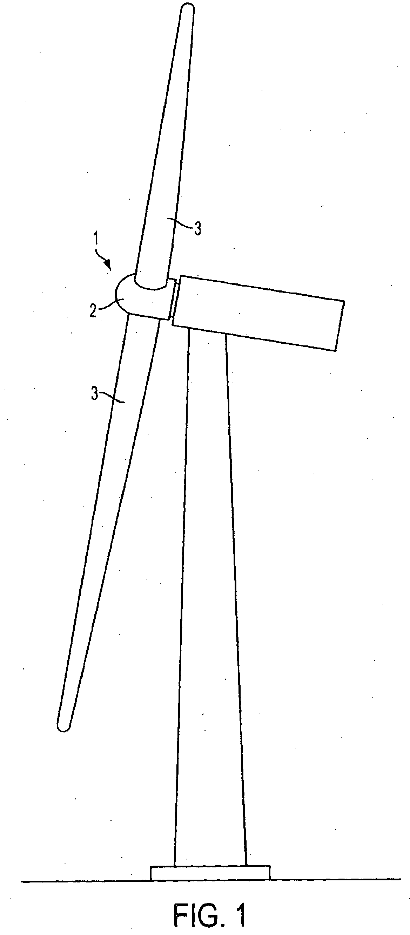

Fig. 1 shows a side view of a horizontal axis wind turbine comprising a rotor 1 with a hub 2 and three blades (one hidden in the figure).

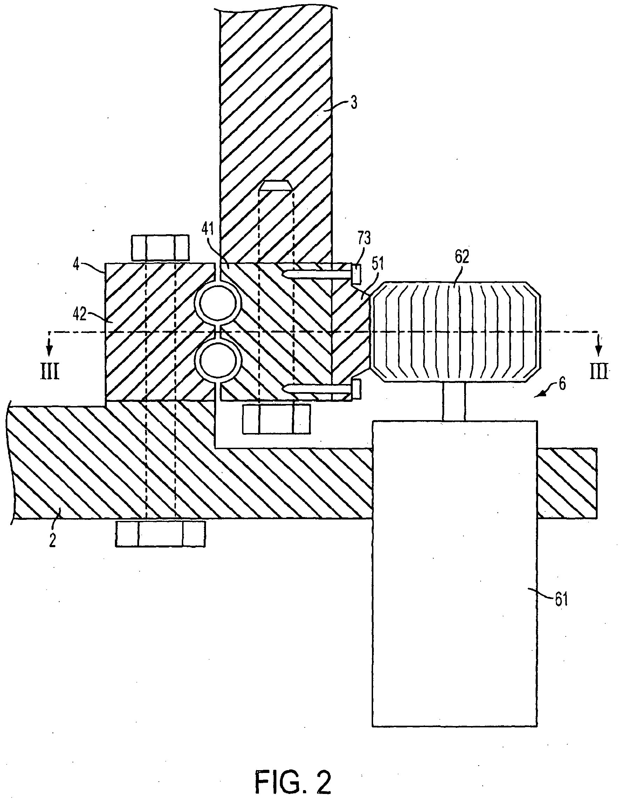

Fig. 2 shows a cross-sectional view of a part of an interface between the hub 2 and one of the blades 3. A blade pitch system of the wind turbine comprises for each blade a blade bearing 4 mounted between the hub 2 and the blade 3. The bearing 4 comprises a first bearing ring 41 that is fixed to the blade 3 and a second bearing ring 42 that is fixed to the hub 3. A ring gear device in the form of a first ring gear segment 51 is fixed to the first bearing ring 41, in a manner described closer below. A pitch drive 6 comprises an electric motor 61 is fixed to the hub 2 and a pinion 62 mounted to the motor 61. The pinion 62 is engaged with the first ring gear segment 51 for rotating the blade around the axis of rotation of the bearing 4.

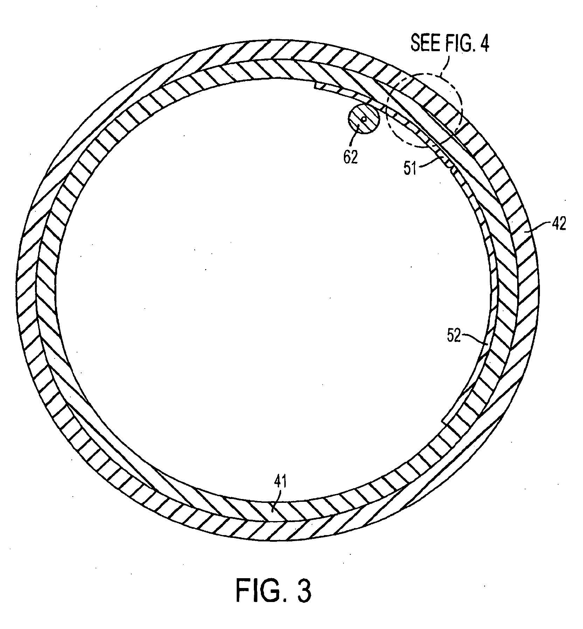

As can be seen in fig. 3, the first ring gear segment 51 covers about 40 degrees of the circumference of the blade to hub interface. This angular length and the location of the first ring gear segment 51 in relation to the blade 3, are such that during normal operation of the wind turbine, the pinion 62 engages only the first ring gear segment 51. A second ring gear segment 52 is adjacent to, and abuts, the first ring gear segment 51. The second ring gear segment 52 covers about 70 degrees of the circumference of the blade to hub interface, and it's angular length and location are adapted to feathering of the blades during a shut-down sequence and a subsequent stand still condition of the wind turbine. When the blades are feathered, a leading edge of the blades is pointed into the wind.

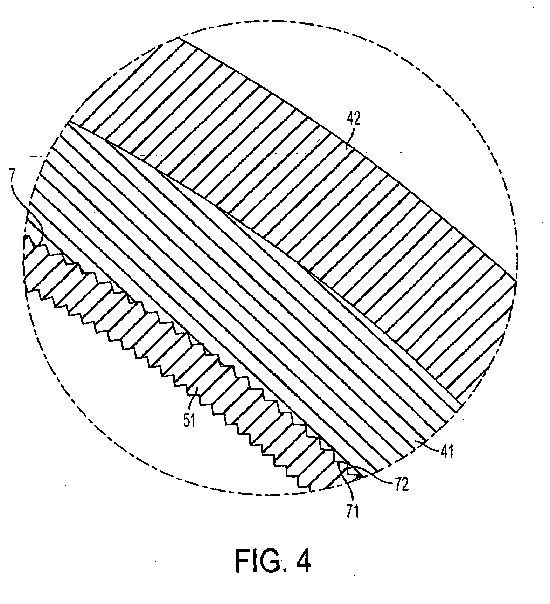

As can be seen in fig. 4, the connection between the first bearing ring 41 and the first ring gear segment 51 comprises a toothed interface 7. The interface 7 comprises meshing teeth 71 formed by grooves 72 in the surfaces of the first bearing ring 41 and the first ring gear segment 51. The grooves 72 are oriented in parallel to the rotational axis of the bearing 4. The ring gear segment is held in place by bolts 73 shown in fig. 2, which bolts extend in the radial direction of the bearing 4, and engage threaded holes in the first bearing ring.

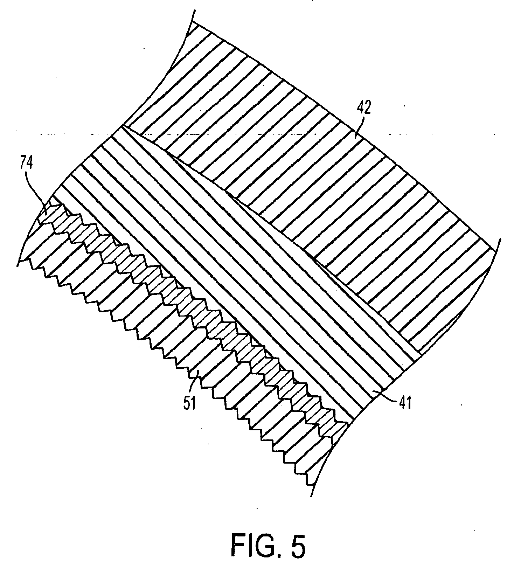

Fig. 5 shows an alternative including a spacer ring segment 74 located between the first bearing ring 41 and the first ring gear segment 51. The spacer ring segment 74 has a toothed surface of both sides so that two toothed interfaces are provided in the connection between the first bearing ring 41 and the first ring gear segment 51.

## Claims

1. A horizontal axis wind turbine comprising a rotor with a hub (2), at least one blade (3), and a blade pitch system, the blade pitch system comprising for each blade
- a blade bearing (4) mounted between the hub and the blade, the bearing comprising two bearing rings (41, 42), one of which is fixed to the hub and the other of which is fixed to the blade,
- a ring gear device (51) fixed to a first of the bearing rings, and
- a pinion (62) mounted to a motor (61), where the motor is fixed to the hub if the first bearing ring is fixed to the blade and the motor is fixed to the blade if the first bearing ring is fixed to the hub, and where the pinion is engaged with the ring gear device,
**characterized in that**
- a connection between the first bearing ring and the ring gear device comprises a toothed interface (7).

2. A wind turbine according to claim 1, wherein the ring gear device is mounted directly onto the first of the bearing rings.

3. A wind turbine according to any one of the preceding claims, wherein the interface comprises teeth formed by grooves (72) oriented in parallel to the rotational axis of the bearing.

4. A wind turbine according to any one of the preceding claims, wherein the first bearing ring and the ring gear device present complementary teeth that mesh in the interface.

5. A wind turbine according to any one of the preceding claims, wherein the ring gear device is a gear ring segment.

6. A wind turbine according to claim 5, wherein the gear ring segment has a length and a location adapted to the engagement of the pinion during normal operation of the wind turbine.

## Patentansprüche

1. Windturbine mit einer horizontalen Achse, umfassend einen Rotor mit einer Nabe (2), zumindest einem Blatt (3) und einem Blattwinkeleinstellsystem, das Blattwinkeleinstellsystem umfassend für jedes Blatt
- ein Blattlager (4) befestigt zwischen der Nabe und dem Blatt, das Lager umfassend zwei Lagerringe (41, 42), wobei einer dieser an der Nabe und der andere dieser an dem Blatt befestigt ist,
- eine Zahnkranzvorrichtung (51) befestigt an einem ersten der Lagerringe, und
- ein Antriebsritzel (62) befestigt an einem Motor (61), wobei der Motor an der Nabe befestigt ist, wenn der erste Lagerring an dem Blatt befestigt ist, und wobei der Motor an dem Blatt befestigt ist, wenn der erste Lagerring an der Nabe befestigt ist, und wobei das Antriebsritzel mit der Zahnkranzvorrichtung eingerastet ist, **dadurch gekennzeichnet, dass**
- eine Verbindung zwischen dem ersten Lagerring und der Zahnkranzvorrichtung eine gezahnte Schnittstelle (7) aufweist.

2. Windturbine nach Anspruch 1, wobei die Zahnkranzvorrichtung direkt auf dem ersten der Lagerringe befestigt ist.

3. Windturbine nach einem der vorhergehenden Ansprüche, wobei die Schnittstelle Zähne aufweist, die von Nuten (72) gebildet werden, die parallel zu der Rotationsachse des Lagers ausgerichtet sind.

4. Windturbine nach einem der vorhergehenden Ansprüche, wobei der erste Lagerring und die Zahnkranzvorrichtung komplementäre Zähne ausweisen, die an der Schnittstelle ineinandergreifen.

5. Windturbine nach einem der vorhergehenden Ansprüche, wobei die Zahnkranzvorrichtung ein Zahnkranzsegment ist.

6. Windturbine nach Anspruch 5, wobei das Zahnkranzsegment eine Länge und eine Position aufweist, geeignet zum Einrasten des Antriebsritzels während des normalen Betriebs der Windturbine.

## Revendications

1. Eolienne à axe horizontal comprenant un rotor avec un moyeu (2), au moins une pale (3) et un système de pas de pale, le système de pas de pale comprenant pour chaque pale :
- un appui de pale (4) monté entre le moyeu et la pale, l'appui comprenant deux couronnes d'appui (41, 42) dont l'une est fixée au moyeu et l'autre est fixée à la pale,
- un dispositif à couronne dentée (51) fixé à une première des couronnes d'appui et
- un pignon (62) monté sur un moteur (61), dans laquelle le moteur est fixé au moyeu si la première couronne d'appui est fixée à la pale et le moteur est fixé à la pale si la première couronne d'appui est fixée au moyeu et dans laquelle le pignon est engagé sur le dispositif à couronne dentée,
**caractérisée en ce que** :
- un raccordement entre la première couronne d'appui et le dispositif à couronne dentée comprend une interface dentée (7).

2. Eolienne selon la revendication 1, dans laquelle le dispositif à couronne dentée est monté directement sur la première des couronnes d'appui.

3. Eolienne selon l'une quelconque des revendications précédentes, dans laquelle l'interface comprend des dents formées par des rainures (72) orientées parallèlement à l'axe de rotation du palier.

4. Eolienne selon l'une quelconque des revendications précédentes, dans laquelle la première couronne d'appui et le dispositif à couronne dentée présentent des dents complémentaires qui s'engrènent dans l'interface.

5. Eolienne selon l'une quelconque des revendications précédentes, dans laquelle le dispositif à couronne dentée est un segment de couronne dentée.

6. Eolienne selon la revendication 5, dans laquelle le segment de couronne dentée a une longueur et un emplacement adaptés à l'engagement du pignon au cours d'un fonctionnement normal de l'éolienne.
